(19) Europäisches Patentamt
European Patent Office
Office européen des brevets

(11) **EP 3 036 293 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **14752332.8**

(22) Anmeldetag: **18.08.2014**

(51) Internationale Patentklassifikation (IPC):
**C09D 7/00** *(2018.01)*   **C08F 265/06** *(2006.01)*
**C09D 151/06** *(2006.01)*   **C09D 151/00** *(2006.01)*
**C08F 265/04** *(2006.01)*   **C08F 2/22** *(2006.01)*
**C09D 5/02** *(2006.01)*

(52) Gemeinsame Patentklassifikation (CPC):
**C08F 265/06; C08F 285/00; C09D 151/003;**
C08F 265/04; C09D 7/65; C09D 7/66

(86) Internationale Anmeldenummer:
**PCT/EP2014/067522**

(87) Internationale Veröffentlichungsnummer:
**WO 2015/024882 (26.02.2015 Gazette 2015/08)**

(54) **VERFAHREN ZUR HERSTELLUNG VON ORGANISCHEN HOHLTEILCHEN**

METHOD FOR MANUFACTURING OF ORGANIC HOLLOW PARTICLES

PROCÉDÉ DE FABRICATION DE PARTICULES ORGANIQUES CREUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2013 EP 13181399**

(43) Veröffentlichungstag der Anmeldung:
**29.06.2016 Patentblatt 2016/26**

(73) Patentinhaber: **BASF SE**
**67056 Ludwigshafen am Rhein (DE)**

(72) Erfinder:
• **KEHRLÖSSER, Daniel**
**68161 Mannheim (DE)**
• **LESWIN, Joost**
**68309 Mannheim (DE)**
• **SPECKER, Daniel**
**68259 Mannheim (DE)**
• **ROSCHMANN, Konrad**
**68526 Ladenburg (DE)**
• **GERST, Matthias**
**67487 Maikammer (DE)**
• **WIESE, Harm**
**69514 Laudenbach (DE)**

(74) Vertreter: **BASF IP Association**
**BASF SE**
**G-FLP-C006**
**67056 Ludwigshafen (DE)**

(56) Entgegenhaltungen:
**EP-A2- 1 193 276**   **WO-A1-2011/009875**
**DE-A1-102005 033 516**   **US-B1- 6 235 810**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Herstellung von organischen Hohlteilchen mit einer Kern-Schale-Struktur, wobei das Gewichtsverhältnis der Quellsaat (ii) zu dem Saatpolymer (i) 10:1 bis 150:1, das Gewichtsverhältnis des Kernstufenpolymers zu der ersten Schale (iii) 2:1 bis 1:5, und das Gewichtsverhältnis der dritten Schale (vii) zur zweiten Schale (iv) 1:2 bis 1:10 beträgt, sowie deren Verwendung in Anstrichmitteln, Papierbeschichtungen, Schäumen, Pflanzenschutzmitteln, Tinten und kosmetischen Mitteln.

Organische Hohlteilchen sind eine besondere Art von Kern-Schale-Teilchen, die in getrockneter Form aus einem luftgefüllten Hohlraum, umgeben von einer harten Hülle bestehen. Aufgrund dieses Aufbaus haben sie die besondere Eigenschaft, Licht zu streuen, wodurch ihr Einsatz als Weißpigment in Anstrichmitteln, Papierbeschichtungen und in kosmetischen Mitteln, beispielsweise Sonnencremes begründet liegt. Dort ersetzen sie teilweise das anorganische Weißpigment Titandioxid und verstärken zusätzlich die Wirkung des verbliebenen $TiO_2$.

C. J. McDonald und M. J. Devon beschreiben in Advances in Colloid and Interface Science 2002, 99, 181-213 eine Reihe von Möglichkeiten zur Herstellung dieser Hohlteilchen wie unter anderem die Quellung mit organischen Lösungsmitteln oder Treibmitteln, Verkapselung von Kohlenwasserstoffen oder Ansätze aufbauend auf W/O/W-Emulsionen. Die aus ökologischen wie auch aus ökonomischen Gründen bevorzugte Methode ist allerdings die osmotische Quellung spezieller Kern-Schale-Teilchen.

EP 1 904 544 sowie die WO-A-2011/009875 beschreiben diesen Prozess grundlegend, wobei sich jedoch die Gewichtsverhältnisse der Schalen gegenüber dem erfindungsgemäßen Prozess unterscheiden. Die nach dem erfindungsgemäßen Verfahren hergestellten Polymerisate weisen eine deutlich verbesserte Streueffizienz auf. Dies begründet sich in der Tatsache, dass gegenüber dem in der EP 1 904 544 bzw. dem in der WO-A-2011/009875 offenbarten Verfahren mit dem erfindungsgemäßen Verfahren bezogen auf den Polymerfeststoff mehr Hohlraum generiert wird. Die Größe des Gesamthohlraums der Polymerisate verursacht durch die Kern-Schale Teilchen, lässt sich mit Hilfe einer ebenfalls in der Anmeldung beschriebenen NMR-Methode, an Hand des gemessenen inneren Wassergehalts der Polymerisate bestimmen. Die nach dem erfindungsgemäßen Verfahren hergestellten Polymerisate weisen einen Gehalt von 20% oder mehr an innerem Wasser bezogen auf den Gesamtwasser-gehalt der Dispersion auf. Dies führt zu einem deutlich höheren Weißgrad.

In EP 1 904 544 wurde bereits der Vorteil der Quellung ohne Abstoppen des Radikalflusses gegenüber EP 0 915 108, sowie gegenüber der EP 1 193 276 bei der durch Warten bis der zugegeben Radikalstarter vollständig abreagiert, Abkühlen der Reaktionslösung oder Zugabe von Polymerisationsinhibitoren bzw. Reduktionsmitteln der Radikalfluss gestoppt wird, gezeigt. Auch der erfindungsgemäß beschriebene Prozess stellt sicher, dass zum Zeitpunkt der Quellung sowohl Radikalfluss als auch eine zur Quellung ausreichende Monomerkonzentration vorliegt.

US 8, 013, 081 beschreibt ebenfalls ein Verfahren zur Herstellung von organischen Hohlteilchen. Allerdings unterscheidet sich der erfindungsgemäß beschriebene Prozess auch hier durch grundlegend unterschiedliche Gewichtsverhältnisse der Schalen zueinander. Die nach dem erfindungsgemäßen Verfahren hergestellten Polymerisate weisen eine deutlich verbesserte Streueffizienz auf. Dies begründet sich in der Tatsache, dass gegenüber dem in der US 8 013 081 offenbarten Verfahren mit dem erfindungsgemäßen Verfahren mehr Hohlraum generiert wird. Die Größe des Gesamthohlraums der Polymerisate verursacht durch die Kern-Schale Teilchen, lässt sich mit Hilfe einer ebenfalls in der Anmeldung beschriebenen NMR-Methode, an Hand des gemessen inneren Wassergehalts der Polymerisate bestimmen.

In EP 2 511 312 wird ein Verfahren beschrieben, welches auf den Einsatz von Polymerisationinhibitoren bzw. Reduktionsmittel verzichtet und durch Verwendung von geringen Mengen an Radikalstartern zu Beginn der ersten Schale (analog zur im erfindungsgemäßen Verfahren beschriebenen Schale iii), eine Quellung durch Plastifizierung mit einem Monomer-LösungsmittelSystem umfassend von 5 bis 50 Gew.% eines Monomers des Schalen-Monomersystems der zweiten Schale (analog zur im erfindungsgemäßen Verfahren beschriebenen Schale iv) ermöglicht. Die nach dem erfindungsgemäßen Verfahren hergestellten Polymerisate unterscheiden sich daher grundlegend dadurch, dass während der Quellung, beschrieben durch die Schritte v) und vi), kein Monomer der zweiten Schale iv) zur Plastifizierung verwendet wird sondern ein Weichmachermonomer mit einer Ceiling Temperatur kleiner 181°C, bevorzugt kleiner 95°C.

Die Aufgabe der vorliegenden Erfindung, die Entwicklung eines Herstellverfahrens für organische Hohlteilchendie einen gegenüber dem Stand der Technik verbesserten Weißgrad aufweisen, wurde wie folgt erfindungsgemäß gelöst:

Verfahren zur Herstellung von organischen Hohlteilchen durch Herstellung eines Mehrstufenemulsionspolymers durch

    i) sequentielle Polymerisation einer Saat,

    ii) anschließende Umsetzung mit einer Quellsaat enthaltend 55 bis 99,9 Gew.-% mindestens eines nicht-ionischen ethylenisch ungesättigten Monomers und 0,1 bis 45 Gew.-% mindestens eines ethylenisch ungesättigten hydrophilen Monomers, jeweils bezogen auf das Gesamtgewicht des Kernstufenpolymers, das sowohl Saat als auch Quellsaat umfasst,

    iii) anschließende Polymerisation einer ersten Schale enthaltend 85 bis 99,9 Gew.-% mindesten eines nicht-ionischen ethylenisch ungesättigten Monomers und 0,1 bis 15 Gew.-% mindestens eines hydrophilen ethylenisch ungesättigten Monomers,

iv) anschließende Polymerisation einer zweiten Schale enthaltend 85 bis 99,9 Gew.-% mindestens eines nicht-ionisch ethylenisch ungesättigten Monomers und 0,1 bis 15 Gew.-% mindestens eines hydrophilen ethylenisch ungesättigten Monomers,

v) anschließende Zugabe mindestens eines Weichmachermonomers mit einer Ceiling Temperatur kleiner 181°C, bevorzugt kleiner 95°C,

vi) Neutralisation bis zu einem pH-Wert von mindestens 7,5 der so gebildeten Partikel mit einer Base,

vii) anschließende Polymerisation einer dritten Schale enthaltend 90 bis 99,9 Gew.-% mindestens eines nicht-ionisch ethylenisch ungesättigten Monomers und 0,1 bis 10 Gew.-% mindestens eines hydrophilen ethylenisch ungesättigten Monomers,

viii) sowie gegebenenfalls Polymerisation einer oder mehrerer weiterer Schalen enthaltend mindestens ein nicht-ionisches ethylenisch ungesättigtes Monomer und mindestens ein hydrophiles ethylenisch ungesättigtes Monomer, wobei

das Gewichtsverhältnis der Quellsaat (ii) zu dem Saatpolymer (i) 10:1 bis 150:1, das Gewichtsverhältnis des Kernstufenpolymers zu der ersten Schale (iii) 2:1 bis 1:5, und

das Gewichtsverhältnis der dritten Schale (vii) zur zweiten Schale (iv) 1:2 bis 1:10 beträgt.

Ein weiterer Gegenstand der Erfindung ist die Verwendung der erfindungsgemäß erhältlichen organischen Hohlteilchen in Anstrichmitteln, Papierbeschichtungen, Schäumen, Pflanzenschutzmitteln, Tinten oder kosmetischen Mitteln, sowie Anstrichmittel, Papier, Schäume, Pflanzenschutzmittel, Tinten oder kosmetische Mittel enthaltend die erfindungsgemäß hergestellten organischen Hohlteilchen.

Ein Vorteil der Erfindung liegt darin, dass durch die beschriebene Änderung der Gewichtsverhältnisse zwischen Quellsaat (ii) und Saatpolymer (i), des Kernstufenpolymers und der ersten Schale (iii) sowie im Besonderen der dritten Schale (vii) und der zweiten Schale (iv) gegenüber dem Stand der Technik der Gesamthohlraum der Polymerisate vergrößert wird, was zu einer deutlichen Verbesserung im Weißgrad führt und so dieser Nachteil des Standes der Technik umgangen wird.

Die nach dem erfindungsgemäßen Verfahren hergestellten Polymerisate weisen einen Gehalt von 20% bis 40% oder mehr an innerem Wasser, bezogen auf den Gesamtwassergehalt der Dispersion auf. Dies führt zu einem deutlich höheren Weißgrad.

Bei der beschriebenen Erfindung handelt es sich um mehrstufige sequentielle Emulsionspolymerisation. Sequentiell bezieht sich auf die Durchführung der einzelnen Stufen, wobei auch jede einzelne Stufe aus mehreren sequentiellen Schritten aufgebaut sein kann.

Der Begriff "Saat" bezieht sich auf eine wässrige Polymerdispersion, die zu Beginn der Mehrstufenpolymerisation eingesetzt wird und das Produkt aus einer Emulsionspolymerisation ist, oder auf eine wässrige Polymerdispersion, die am Ende einer der Polymerisationsstufen zur Herstellung der Hohlteilchendispersion, mit Ausnahme der letzten Stufe, vorliegt.

Die Saat, die zu Beginn der Polymerisation der ersten Stufe eingesetzt wird, kann auch in situ hergestellt werden und enthält als Monomer-Bestandteile bevorzugt Styrol, Acrylsäure, Methacrylsäure, Ester der Acrylsäure und Methacrylsäure oder Gemische davon.

Die mittlere Teilchengröße des Saatpolymers im ungequollenen Zustand beträgt 20 bis 100 nm.

Die Quellsaat enthält 55 bis 99,9 Gew.-%, bevorzugt 60 bis 80 Gew.-%, eines nicht-ionischen ethylenisch ungesättigten Monomers und 0,1 bis 45 Gew.-%, bevorzugt 20 bis 40 Gew.-% eines ethylenisch ungesättigten hydrophilen Monomers.

Das Gewichtsverhältnis der Quellsaat (ii) zu dem Saatpolymer (i) beträgt 10:1 bis 150:1 Die mittlere Teilchengröße im ungequollenen Zustand des Kernstufenpolymers, bestehend aus Saat (i) und Quellsaat (ii), beträgt 50 bis 300 nm, bevorzugt 50 bis 200 nm.

Die Glasübergangstemperatur, bestimmt nach der Fox-Gleichung (John Wiley & Sons Ltd., Baffins Lane, Chichester, England, 1997), des Kernstufenpolymers liegt im protonierten Zustand zwischen -20°C und 150°C.

Unter nicht-ionischen ethylenisch ungesättigten Monomeren versteht man beispielsweise Styrol, Vinyltoluol, Ethylen, Butadien, Vinylacetat, Vinylchlorid, Vinylidenchlorid, Acrylnitril, Acrylamid, Methacrylamid, $(C_1$-$C_{20})$Alkyl- oder $(C_3$-$C_{20})$Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1$-$C_{10}$-Hydroxyalkyl(meth)acrylate, wie Hydroxyethyl(meth)acrylat, Hydroxypropyl(meth)acrylat, Glycidyl(meth)acrylat, bevorzugt Methylmethacrylat.

Unter ethylenisch ungesättigten hydrophilen Monomeren versteht man beispielsweise Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethylitakonat, Maleinsäureanhydrid, Fumarsäure, Monomethylfumarat, Itakonsäureanhydrid, sowie Leinölfettsäuren, wie Ölsäure, Linolsäure und Linolensäure sowie weitere Fettsäuren, wie Rizinolsäure, Palmitoleinsäure, Elaidinsäure, Vaccensäure, Icosensäure, Cetoleinsäure, Erucasäure, Nervonsäure, Arachidonsäure, Timnodonsäure, Clupanodonsäure, bevorzugt Acrylsäure und Methacrylsäure.

Die erste Schale (iii) enthält 85 bis 99,9 Gew.-% mindestens eines nicht-ionischen ethylenisch ungesättigten Monomers, bevorzugt 90 bis 99,9 Gew.-% , sowie 0,1 bis 15 Gew.-%, bevorzugt 0,1 bis 10 Gew.-% mindestens eines hydrophilen ethylenisch ungesättigten Monomers. Unter nicht-ionischen ethylenisch ungesättigten Monomeren versteht man beispielsweise Styrol, Vinyltoluol, Ethylen, Butadien, Vinylacetat, Vinylchlorid, Vinylidenchlorid, Acrylnitril, Acrylamid, Methacrylamid, $(C_1-C_{20})$Alkyl- oder $(C_3-C_{20})$Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethyacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1-C_{10}$-Hydroxyalkyl(meth)acrylate, wie Hydroxyethyl(meth)acrylat, Hydroxypropyl(meth)acrylat, Glycidyl-(meth)acrylat, bevorzugt Styrol, Acrylnitril, Methacrylamid, Methacrylat, Methylmethacrylat, Ethylacrylat, Ethylmethacrylat, Butylacrylat, Butylmethacrylat, 2-Ethylhexylacrylat, 2-Ethyl-hexylmethacrylat.

Unter ethylenisch ungesättigten hydrophilen Monomeren versteht man beispielsweise Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethylitakonat, Maleinsäureanhydrid, Fumarsäure, Monomethylfumarat sowie Leinölfettsäuren, wie Ölsäure, Linolsäure und Linolensäure sowie weitere Fettsäuren, wie Rizinolsäure, Palmitoleinsäure, Elaidinsäure, Vaccensäure, Icosensäure, Cetoleinsäure, Erucasäure, Nervon-säure, Arachidonsäure, Timnodonsäure, Clupanodonsäure, bevorzugt Acrylsäure, Methacrylsäure, Itakonsäure, Itakonsäureanhydrid, Itakonsäuremonomethylester.

Die erste Schale (iii) umschließt das Kernstufenpolymer. Das Gewichtsverhältnis des Kernstufenpolymers zu der ersten Schale (iii) beträgt 2:1 bis 1:5 bevorzugt 2:1 bis 1:3, und das Schalenpolymer besitzt im protonierten Zustand eine Glasübergangstemperatur, bestimmt nach der Fox-Gleichung, zwischen -60°C bis 120°C.

Die Teilchengröße dieser Stufe bestehend aus Kernstufenpolymer und erster Schale (iii) beträgt im ungequollenen Zustand 60nm bis 500 nm, bevorzugt 60 bis 300 nm.

Die zweite Schale (iv) enthält 85 bis 99,9, bevorzugt 90 bis 99,9 Gew.-% mindestens eines nicht-ionischen ethylenisch ungesättigten Monomers und 0,1 bis 15 Gew.-%, bevorzugt 0,1 bis 10 Gew.-% mindestens eines hydrophilen ethylenisch ungesättigten Monomers.

Unter nicht-ionischen ethylenisch ungesättigten Monomeren versteht man beispielsweise Styrol, p-Methylstyrol, t-butyl-Styrol, Vinyltoluol, Ethylen, Butadien, Vinylacetat, Vinylchlorid, Vinylidenchlorid, Acrylnitril, Acrylamid, Methacrylamid, $(C_1-C_{20})$Alkyl- oder $(C_3-C_{20})$Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Bezylmethylacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1-C_{10}$-Hydroxyalkyl(meth)acrylate, wie Hydroxyethyl(meth)acrylat, Hydroxypropyl(meth)acrylat, Glycidyl(meth)acrylat, bevorzugt Styrol, Acrylnitril, Methacrylamid, Methacrylat, Methylmethacrylat, Ethylacrylat, Ethylmethacrylat, Butylacrylat, Butylmethacrylat, 2-Ethyl-hexylacrylat, 2-Ethylhexylmethacrylat.

Unter ethylenisch ungesättigten hydrophilen Monomeren versteht man beispielsweise Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethyllitakonat, Maleinsäureanhydrid, Fumarsäure, Monomethylfumarat, sowie Leinölfettsäuren, wie Ölsäure, Linolsäure und Linolensäure sowie weitere Fettsäuren Rizinolsäure, Palmitoleinsäure, Elaidinsäure, Vaccensäure, Icosensäure, Cetoleinsäure, Erucasäure, Nervonsäure, Arachidonsäure, Timnodonsäure, Clupanodonsäure, bevorzugt Acrylsäure, Methacrylsäure, Itakonsäure, Itakonsäureanhydrid, Itakonsäuremonomethylester und Leinölfettsäuren.

Die erste Schale wird von der zweiten Schale umhüllt und das Gewichtsverhältnis der ersten Schale (iii) zu der zweiten Schale (iv) beträgt 1:1 bis 1:30, und das Schalenpolymer besitzt im protonierten Zustand eine Glasübergangstemperatur nach Fox von 50 bis 120°C.

Die mittlere Teilchengröße dieser Stufe, bestehend aus Kernstufenpolymer, erster Schale (iii) und zweiter Schale (iv), beträgt im ungequollenen Zustand 70 bis 1000 nm,

Unter dem unter (v) aufgeführten Weichmachermonomer versteht man beispielsweise α- Methylstyrol, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen oder Methyl-2-tert-butylacrylat sowie weitere in J. Brandrup, E.H. Immergut, Polymer Handbook 3rd Edition, II/316ff aufgeführte Monomere. Bevorzugt wird als Weichmachermonomer α-Methylstyrol eingesetzt.

Wird in wässriger Lösung oder Verdünnung polymerisiert, so können die Monomere vor oder während der Polymerisation ganz oder teilweise durch Basen neutralisiert werden. Als Basen können beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin , Polyvinylamin oder Mischungen der aufgeführten eingesetzt werden.

Bevorzugt werden die ethylenisch ungesättigten hydrophilen Monomere, die in (i) - (v) verwendet werden, vor oder während der Polymerisation nicht neutralisiert.

Die unter (vi) aufgeführte Neutralisation erfolgt mit einer oder mehrerer der beispielsweise genannten Basen zur Quellung des Kerns und führt damit zur Bildung des organischen Hohlteilchens nach Trocknung.

Vorzugsweise werden zur unter (vi) aufgeführten Neutralisation Natriumhydroxid, Ammoniak, Triethanolamin und Diethanolamin eingesetzt.

Die ethylenisch ungesättigten hydrophilen Monomere die nach (vi) verwendet werden, werden bevorzugt während der Polymerisation neutralisiert.

Die dritte Schale (vii) enthält 90 bis 99,9, bevorzugt 95 bis 99,9 Gew.-% mindestens eines nicht-ionisch ethylenisch ungesättigten Monomers und 0,1 bis 10, bevorzugt 0,1 bis 5 Gew.-% mindestens eines hydrophilen ethylenisch ungesättigten Monomers.

Unter den nicht-ionischen ethylenisch ungesättigten Monomeren versteht man beispielsweise Styrol, Ethylvinylbenzol, Vinyltoluol, Ethylen, Butadien, Vinylacetat, Vinylchlorid, Vinylidenchlorid, Acrylnitril, Acrylamid, Methacrylamid, $(C_1-C_{20})$Alkyl- oder $(C_3-C_{20})$Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Bezylmethylacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1-C_{10}$-Hydroxyaklkyl(meth)acrylate, wie Hydroxyethyl(meth)acrylat, Hydroxypropyl(meth)acrylat, Glycidyl(meth)acrylat, bevorzugt Styrol, Acrylnitril, Methacrylamid, Methacrylat, Methylmethacrylat, Ethylacrylat, Ethylmethacrylat, Butylacrylat, Butylmethacrylat, 2-Ethylhexylacrylat, 2-Ethylhexylmethacrylat.

Unter den ethylenisch ungesättigten hydrophilen Monomeren versteht man beispielsweise Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethyllitakonat, Maleinsäureanhydrid, Fumarsäure, Monomethylfurmarat, sowie Leinölfettsäuren, wie Ölsäure, Linolsäure und Linolensäure sowie weitere Fettsäuren, wie Rizinolsäure, Palmitoleinsäure, Elaidinsäure, Vaccensäure, Icosensäure, Cetoleinsäure, Eruca-säure, Nervonsäure, Arachidonsäure, Timnodonsäure, Clupanodonsäure, bevorzugt Acrylsäure, Methacrylsäure, Itakonsäure, Itankonsäureanhydrid, Itakonsäuremonomethylester und Leinölfettsäuren.

Das Gewichtsverhältnis der dritten zur zweiten Schale beträgt 1:2 bis 1:10, und das Schalenpolymer besitzt eine Glasübergangstemperatur nach Fox von 50 bis 120°C.

Werden die erfindungsgemäß erhältlichen Polymerisate für den Anstrich verwendet, sollte die mittlere Endteilchengröße 100 bis 600 nm betragen, für die Anwendung im Papier und in der Kosmetik 200 bis 2500 nm und für Schäume 300 bis 800 nm.

Im Anstrich können die eingesetzten Pigmente, speziell $TiO_2$, vollständig oder teilweise durch die hier beschriebene Polymerdispersion ersetzt werden. Typischerweise enthalten solche Anstrichmittel u.a. Wasser, Verdickungsmittel, Natronlauge, Pigmentverteiler, Assoziativverdicker, Entschäumer, Biozid, Bindemittel, sowie Filmbildehilfsmittel.

Die Hohlteilchendispersion kann auch für ähnliche Anwendungen in anderen Beschichtungen, bestehend aus harzartigen Kondensationsprodukten, wie Phenolate und Aminoplaste auf Basis von Harnstoffformaldehyd und Melaminformaldehyd verwendet werden. Ebenso ist die Verwendung in weiteren Beschichtungen basierend auf wasserdispergierbaren Alkyde, Polyurethanen, Polyestern, Ethylvinylacetaten sowie Styrolbutadien möglich.

Der Einsatz der nach dem erfindungsgemäßen Verfahren erhältlichen organischen Pigmente in Papiercoatings führt zu einer Erhöhung des Papierglanzes. Das lässt sich auf die, anders als bei anorganischen Pigmenten, unter Druck verformbare Hülle zurückführen. Auch die Papierdruckqualität wird gesteigert. Der Austausch von anorganischen Pigmenten gegen die hier beschriebenen organischen Pigmente führt zu einer Erniedrigung der Dichte des Coatings und somit zu leichterem Papier.

In Kosmetika können die nach dem erfindungsgemäßen Verfahren erhältlichen organischen Pigmente beispielsweise in Sonnenschutzcremes zur Verstärkung des Lichtschutzes eingesetzt werden. Durch die außergewöhnlichen Lichtstreueigenschaften wird die Wahrscheinlichkeit der Absorption von UV-Strahlung durch UV-aktive Substanzen in der Sonnencreme erhöht.

Die nach dem erfindungsgemäßen Verfahren erhältlichen organischen Pigmente können weiterhin in Schäumen, Pflanzenschutzmitteln, thermoplastischen Formmassen und Tinten eingesetzt werden.

Die Polymerisate können nach üblichen Polymerisationsverfahren der Emulsionspolymerisation hergestellt werden. Es wird bevorzugt unter Ausschluss von Sauerstoff gearbeitet, vorzugsweise in einem Stickstoffstrom. Für die Polymerisationsmethode werden die üblichen Apparaturen verwendet, z.B. Rührkessel, Rührkesselkaskaden, Autoklaven, Rohrreaktoren und Kneter. Die Polymerisation kann in Lösungs- oder Verdünnungsmitteln, wie z.B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen wie z.B. Iso-propanol/Wasser-Mischungen ausgeführt werden.

Die Polymerisation kann bei Temperaturen von 20 bis 300, vorzugsweise von 50 bis 200°C durchgeführt werden.

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z.B. RedOx-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxodisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Ditert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxodisulfat, Azodiisobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxodisulfat. Für die Polymerisation in wässrigem Medium werden bevorzugt wasserlösliche Initiatoren eingesetzt.

Auch die bekannten RedOx-Initiatorsysteme können als Polymerisationsinitiatoren verwendet werden. Solche RedOx-Initiatorsysteme enthalten mindestens eine peroxidhaltige Verbindung in Kombination mit einem RedOx-Coinitiator z.B. reduzierend wirkenden Schwefelverbindungen, beispielsweise Bisulfite, Sulfite, Sulfinate, Thiosulfate, Dithionite und Tetrathionate von Alkalimetallen und Ammoniumverbindungen und deren Adukte wie Natriumhydroxymethylsulfinate und Acetonbisulfite sowie Ascorbinsäure, Isoascorbinsäure und Natrium Erythorbat. So kann man Kombinationen von Peroxodisulfaten mit Alkalimetall- oder Ammoniumhydrogensulfiten einsetzen, z.B. Ammoniumperoxodisulfat und Ammoniumdisulfit. Die Menge der peroxidhaltigen Verbindung zum RedOx-Coinitiator beträgt 30:1 bis 0,05:1.

In Kombination mit den Initiatoren bzw. den RedOx-Initiatorsystemen können zusätzlich Übergangsmetallkatalysatoren eingesetzt werden, z.B. Salze von Eisen, Kobalt, Nickel, Kupfer, Vanadium und Mangan. Geeignete Salz sind z.B. Eisen-II-sulfat, Kobalt-II-chlorid, Nickel-II-sulfat, Kupfer-I-chlorid oder auch wasserlösliche Eisen-Chelatkomplexe wie K[Fe-III-EDTA] oder Na[Fe-III-EDTA]. Bezogen auf Monomeren wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30% Wasserstoffperoxid und 0,1 bis 500 ppm Mohrsches Salz.

Auch bei der Polymerisation in organischen Lösungsmitteln können in Kombination mit den obengenannten Initiatoren RedOx-Coinitiatoren und/oder Übergangsmetallkatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an RedOx-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so dass in jedem Temperaturintervall eine ausreichende Konzentration an Radikalen zur Verfügung steht oder ein RedOx-Inititaorsystem zu verwenden bei dem die Peroxidhaltige Komponente bei niedriger Temperatur zunächst durch einen Coinitiator aktiviert wird und bei einer höheren Temperatur thermisch zerfällt, ohne dass weiterer Coinitiator notwendig ist.

Der Initiator kann auch in Stufen zugegeben werden, bzw. die Geschwindigkeit der Initiator-Zugabe kann über die Zeit variiert werden.

Um Polymerisate mit niedrigem mittlerem Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, $C_1$- bis $C_4$-Aldehyde, wie Formaldehyd, Acetaldehyd, Propionaldehyd, Hydroxylammoniumsalze wie Hydroxylammoniumsulfat, Ameisensäure, Natriumbisulfit, hypophosphorige Säure bzw. deren Salze oder Isopropanol. Die Polymerisationsregler werden im allgemeinen in Mengen von 0,1 bis 20 Gew.-%, bezogen auf die Monomeren eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen H-Atomen, oder in Gegenwart von sekundären Alkoholen wie z. B. Isopropanol zu einer Verringerung des mittleren Molekulargewichtes durch Kettenübertragung.

Polymerisate mit geringem bzw. geringerem Molekulargewicht erhält man auch durch: Variation der Temperatur und/oder der Initiator-Konzentration und/oder der Zulaufgeschwindigkeit der Monomeren.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitakonat, Adipinsäuredivinylester, Butandioldivinylether, Trimethylolpropantrivinylether, Allylacrylat, Allylmethacrylat, Methylallymethacrylat, Diallylphthalat, Triallylisocyanurat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Evonik Industries AG).

Die Vernetzer werden vorzugsweise in Mengen von 0,1 bis 70 Gew.-%, bezogen auf die zu polymerisierenden Monomere einer Stufe, eingesetzt. Die Vernetzer können in jeder Stufe zugegeben werden.

Weiterhin kann es vorteilhaft sein, die Monomertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzylsulfonsäuren Erdalkalialkylbenzolsulfonate, sulfonierte Fettsäuren, sulfonierte Olefine, sulfonierte Diphenylether, Sulfosuccinate, Fettalkoholsulfate, Alkylphenolsulfate, Alkylpolyglycolethersulfate, Fettalkoholethersulfate Fettalkoholphosphate, Alkylphenolphosphate, Alkylpolyglycoletherphosphate, Alkylpolyalkylenoxidphosphate, und Fettalkoholetherphosphate. Als nichtionische Emulgatoren können beispielsweise Alkylphenolethoxylate, Polysiloxan Polyalkylenoxid Copolymere, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Vorzugsweise werden Erdalkalialkylbenzolsulfonate, Alkylpolyglycolethersulfate und Polysiloxan-Polyalkylenoxid-Copolymere eingesetzt.

Bezogen auf das Gewicht des Kernstufenpolymers werden die Emulgatoren oder Schutzkolloide üblicherweise in Konzentrationen von 0,05 bis 20 Gew.-%, vorzugsweise in Konzentrationen von 0,1 bis 5 Gew.-%, eingesetzt. In den weiteren Schalen werden die Emulgatoren oder Schutzkolloide üblicherweise in Konzentrationen von 0,05 bis 20 Gew.-%, vorzugsweise in Konzentrationen von 0,1 bis 5 Gew.-%, bezogen auf die zu polymerisierenden Monomere dieser Stufe eingesetzt.

Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zudosiert.

Die Zulaufzeiten können unterschiedlich lang gewählt werden. Beispielsweise kann man für den Initiatorzulauf eine längere Zulaufzeit wählen als für den Monomerzulauf.

Wird das Polymerisat in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat kann von dem organischen Verdünnungsmittel auch durch einen Trocknungsprozess abgetrennt werden.

Durch das erfindungsgemäße Verfahren erhält man eine deutlich höhere Streueffizienz in Anstrichmitteln und damit eine deutliche Verbesserung des Weißgrades, außerdem erhält man Teilchen mit einem deutlich größeren Hohlraum (inneres Wasser). Der Weißgrad der nach dem erfindungsgemäßen Verfahren hergestellten Kern-Schale-Teilchen ist ≥ 78. Der Anteil an innerem Wasser liegt in einem Bereich zwischen 20% und 40%.

Ein weiterer Gegenstand der Erfindung ist ebenfalls die Verwendung der erfindungsgemäß erhältlichen Polymerisatdispersionen in Anstrichmitteln, Papierbeschichtungen, Schäumen, Pflanzenschutzmitteln, Tinten, thermoplastischen Formmassen und kosmetischen Mitteln, bevorzugt in Anstrichmitteln.

Ein weiterer Gegenstand der Erfindung ist ein Anstrichmittel in Form einer wässrigen Zusammensetzung, enthaltend

- wenigstens ein erfindungsgemäßes organisches Hohlteilchen, wie zuvor definiert,
- wenigstens ein filmbildendes Polymer
- gegebenenfalls (an)organische Füllstoff und/oder gegebenenfalls weitere (an)organisches Pigmente,
- gegebenenfalls wenigstens ein übliches Hilfsmittel, und
- Wasser.

Geeignete filmbildende Polymere können wässrige Emusionspolymerisate basierend auf Reinacrylatpolymeren bzw. Styrolacrylatpolymere sein, sowie alle weiteren filmbildende Polymere für Beschichtungen bestehend aus harzartigen Kondensationsprodukten beinhaltend Phenolate und Aminoplaste sowie beinhaltend Harnstoffformaldehyd und Melaminformaldehyd. Ebenso ist die Verwendung von weiteren Polymeren basierend auf wasserdispergierbaren Alkyden, Polyurethanen, Polyestern, Ethylvinylacetaten sowie Styrolbutadien möglich.

Die erfindungsgemäßen organischen Hohlteilchen kommen vorzugsweise in wässrigen Anstrichmitteln zum Einsatz. Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein. Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik Industries AG. Organische Mattierungsmittel sind z.B. erhältlich von der Fa. BYK-Chemie GmbH unter die Ceraflour®- und die Ceramat®-Marken, von der Fa. Deuteron GmbH unter die Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Weiterhin geeignet sind die Luconyl®-Marken der Fa. BASF SE, wie z.B. das Lyconyl®-Gelb, Luconyl®-Braun und Luconyl®-Rot, insbesondere die transparanten Varianten.

Das erfindungsgemäße Beschichtungsmittel (wässrige Anstrichmittel) kann neben der Polymerdispersion, gegebenenfalls zusätzliche filmbildende Polymere, Pigment und weitere Hilfsmittel enthalten.

Zu den üblichen Hilfsmitteln zählen Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Wichtiger sind die Filmbildehilfsmittel, die Verdicker und Entschäumer. Geeignete Filmbildehilfsmittel sind z.B. Texanol® von der Fa. Eastman Chemicals und die Glykolether und -Ester z.B. im Handel erhältlich von BASF SE, unter den Namen Solvenon® und Lusolvan®, und von Dow Chemicals unter den Handelsnamen Dowanol®. Die Menge beträgt vorzugsweise <10 Gew.-% und besonders bevorzugt < 5 Gew.-% auf Gesamtformulierung. Es ist auch möglich völlig ohne Lösemittel zu formulieren.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf Feststoffgehalt des Anstrichmittels. Weitere Formulierungshinweise für Holzanstriche sind ausführlich beschrieben in "water-based acrylates for decorative coatings" von den Autoren M. Schwartz und R. Baumstark, ISBN 3-87870-726-6.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln.

Die erfindungsgemäßen Anstrichmittel zeichnen sich aus durch einfache Handhabung und gute Verarbeitungeigenschaften, sowie durch einen hohen Weißgrad. Die Anstrichmittel sind schadstoffarm. Sie haben gute anwendungstechnische Eigenschaften, z. B. eine gute Wasserfestigkeit, gute Nasshaftung, und gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung soll anhand nachfolgender nicht einschränkender Beispiele erläutert werden.

Experimentelle Methoden

Bestimmung der Glasübergangstemperatur
Die Glasübergangstemperaturen wurden durch theoretische Berechnung per Fox-Gleichung (John Wiley & Sons Ltd., Baffins Lane, Chichester, England, 1997) bestimmt, wobei für die Glasübergangstemperatur von Monomere mit einer Carbonsäurefunktion der Wert für den protonierten Zustand der Säure angenommen wird.

$$1/Tg = W_a/T_{ga} + W_b/T_{gb},$$

wobei

$T_{ga}$ und $T_{gb}$ = Glasübergangstemperatur von Polymer "a" und "b"
$W_a$ und $W_b$ = Gewichtsanteil von Polymer "a" und "b"

Messung der Partikelgröße

Die Bestimmung der Teilchengrößen erfolgte mit Hilfe der Hydrodynamischen Fraktionierung mit einem PSDA (Particle Size Distribution Analyser) der Fa. Polymer Labs. Der verwendete Säulentyp Cartridge PL0850-1020 wurde bei einem Durchfluss von 2 ml•min⁻¹ betrieben. Die Proben wurden mit der Eluentlösung bis zu einer Absorption von 0,03 AU•μl⁻¹ verdünnt.

Die Probe wird durch das Größenausschlussprinzip abhängig vom hydrodynamischen Durchmesser eluiert. Das Elutionsmittel enthält 0,2 Gew.-% Dodecylpoly(ethylenglycolether)₂₃, 0,05 Gew.-% Natriumdodecylsulfunat, 0,02 Gew.-% Natriumdihydrogenphosphat und 0,02 Gew.-% Natriumazid in entionisiertem-Wasser. Der pH liegt bei 5,8. Die Elutionszeit wird mit Polystyrol-Eichlatices kalibriert. Gemessen wird im Bereich 20 nm bis 1200 nm. Detektiert wird mit einem UV Detektor bei einer Wellenlänge 254 nm.

Die Teilchengröße Bestimmung kann weiterhin mit Hilfe eines Coulter M4+ (Particle Analyzer) oder mit Hilfe der Photonenkorrelations-spektroskopie auch als quasielastische Lichtstreuung oder Dynamische Lichtsteuung bekannt (DIN ISO 13321:2004-10) mit einem HPPS (High Performance Particle Sizer) der Fa. Malvern erfolgen.

Durchführung der Weißgradmessung

In ein Gefäß werden 6 g der unten beschriebenen Farbpaste und 0,312 g bezogen auf den Feststoff der Hohlteilchendispersion abgewogen, die Mischung wird - ohne Luft einzurühren - homogenisiert. Mit Hilfe eines 200μm-Rakels wird mit einer Geschwindigkeit von 0,9 cm/sec ein Film dieser Mischung auf eine schwarze Kunststoff-Folie (matte Ausführung, Artikel-Nr. 13.41 EG 870934001, Bernd Schwegmann GmbH & Co. KG, D) ausgezogen. Die Proben werden bei 23°C und einer relativen Luftfeuchtigkeit von 40-50% 24h getrocknet. Im Anschluss daran wird mit einem Spektrophotometer der Marke "Minolta CM-508i" der Weißgrad (L-Wert aus L a b-Farbraum nach EN ISO 11664-4:2012-06) an drei verschieden Stellen gemessen. Die Messpunkte werden markiert, um in der Folge mit einer Mikrometerschraube die entsprechenden Schichtdicken des Farbfilms durch Differenzmessung relativ zur unbeschichteten Kunststoff-Folie zu bestimmen. Nach Berechnung einer durchschnittlichen Schichtdicke sowie eines durchschnittlichen Weißgrades aus den drei Einzelmessungen erfolgt schlussendlich eine Normierung des dabei erhaltenen Weißgrades auf eine Trockenschichtdicke von 50 μm durch lineare Extrapolation. Die hierfür nötige Kalibrierung erfolgte durch Weißgradmessung einer Standard-Hohlteilchendispersion in einem Trockenschichtdicken-Bereich von ca. 30-60 μm.

Herstellung der Farbpaste

In einem Gefäß werden 185 g Wasser vorgelegt und danach die folgenden Einsatzstoffe in der angegebenen Reihenfolge unter einem Dissolver bei ca. 1000 upm zugegeben und für insgesamt ca. 15 Minuten bis zur Homogenität gerührt: 2 g 20 Gew.-% Natronlauge, 12 g Pigmentverteiler® MD 20 (Copolymer aus Maleinsäure und Diisobutylen der Firma BASF SE), 6 g Agitan® E 255 (Siloxan-Entschäumer der Firma Münzing Chemie GmbH), 725 g Acronal® A 684 (Bindemittel, 50 Gew.-% Dispersion der Firma BASF SE), 40 g Texanol® (Filmbildehilfsmittel der Firma Eastman Chemical Company), 4 g Agitan® E 255 (Siloxan-Entschäumer der Firma Münzing Chemie GmbH), 25 g DSX 3000 (30 Gew.-%, Assoziativverdicker:hydrophobic modified polyether (HMPE)) und 2 g DSX 3801 (45 Gew.-% Assoziativverdicker: hydrophobic modified ethoxylated urethane (HEUR))

Bestimmung des inneren Wassergehaltes

Der relative innere Wassergehalt, also der Anteil der Wasserpopulation im Inneren der Kern-Schale Teilchen bezogen auf den Gesamtwassergehalt der Probe, kann durch ein gepulstes Feldgradienten $^1$H-NMR-Experiment (Pulsed-Field-Gradient Nuclear-Magnetic Resonance, PFG-NMR) beschrieben werden. In einem System, in dem die innere und äußere Wasserpopulation diffusivem Austausch unterworfen sind, kann eine exakte Bestimmung mittels Variation der Diffusionszeiten nach Kärger (Annalen der Physik, 7. Folge, Band 27, Heft 1, 1971, S. 107-109) erfolgen. Eine lineare Näherung dieses Austauschmodells ist möglich im Bereich, für den die wirksame Diffusionszeit Δ der PFG-NMR Signalabschwächung sehr viel kleiner ist als die Austauschzeit zwischen den Reservoirs. Im beschriebenen System ist dies zum Beispiel bei Variation von Δ zwischen 7 und 10 ms der Fall, wobei der tatsächliche innere Wassergehalt aus der Extrapolation zu 0 ms bestimmt werden kann. Eine Voraussetzung ist, dass hinreichend starke Gradientenfelder zur Verfügung stehen. Im Falle ähnlicher Austauschzeiten kann ein Vergleich des inneren Wassergehalts näherungsweise auch durch einen Vergleich von Messungen bei einer einzelnen, kurzen Diffusionszeit erfolgen. Im vorliegenden Fall wurden die Vergleiche zwischen ähnlichen Polymerisaten mit einer Diffusionszeit von Δ = 7ms unter Variation der Gradientenfeldstärken g bis 800G/cm bei effektiver Gradientenpulsdauer δ = 1 ms unter Einsatz einer stimulierten Gradienten-Echo Pulssequenz (Steijskal & Tanner, J. Chem. Phys., 1965, Vol. 42, S. 288ff) an einem kommerziell erhältlichen Hochfeld-NMR System (Bruker Biospin, Rheinstetten/Deutschland) durchgeführt. Die Integration des Wassersignals erfolgte von 5.8 bis 3.7 ppm relativ zu dem intern auf 4.7 ppm referenzierten Maximum des Wassersignals. Die relativen Signalanteile von innerem und äußerem Wasser leiteten sich aus den Vorfaktoren eines bi-exponentiellen Fits am Gradientenabhängigen PFG-NMR Signalabfall ab, wobei die Summe der beiden Vorfaktoren normiert wurde. Die gefitteten effektiven Diffusionskoeffizienten in unserem Beispiel lagen in der Größenordnung von $2 \cdot 10^{-9}$ m$^2$/s für äußeres Wasser und $5 \cdot 10^{-12}$ m$^2$/s für inneres Wasser. Der Fehler der Bestimmung des inneren Wassergehalts lag bei etwa 1% bezogen auf 100% Gesamtwassergehalt.

Beispiele

Herstellung der Kern-Schale-Teilchen:

Alle organischen Rohstoffe die nicht als wässrige Lösung vorlagen wurden vor der Synthese durch Destillation gereinigt.

Beispiel 1:

Saat Dispersion A1:

Aus 123,85 g Wasser 0,88 g Disponil® LOBS 20 (Natriumdodecylbenzolsulfonat (20%ig)), 182 g n-Butylacrylat, 163,45 g Methylmethacrylat und 4,55 g Methacrylsäure wurde eine Voremulsion hergestellt. Die Vorlage, bestehend aus 1172,5 g Wasser, 70 g Disponil® LDBS 20, sowie 22,19 g der Voremulsion, wurde in einem Polymerisationsgefäß, welches mit einem Ankerrührer, Ruckflusskühler und zwei Zulaufgefäßen ausgestattet war, in einer Stickstoffatmosphäre auf eine Temperatur von 80°C geheizt und nach Zugabe von 67,2 g einer 2,5 Gew.-% Natriumperoxodisulfat-Lösung 15 min anpolymerisiert. Dann wurde der Rest der Voremulsion innerhalb von 60 min bei 80°C zudosiert. Anschließend wurde noch 15 min nachpolymerisiert und innerhalb von 20 min auf 55°C abgekühlt. Zur Abreicherung der Restmonomeren wurden dann 3,5 g einer 10 Gew.-% wässrigen *tert*-Butylhydroperoxid-Lösung sowie 2,19 g einer 10 Gew.-% wässrigen Rongalit® C (Natriumhydroxymethylsulfonat)-Lösung zum Reaktionsgemisch zugegeben, nach einer Stunde rühren wurde auf 30°C abgekühlt und durch Zugabe von 4,38 g 25 Gew.-% wässrigen Ammoniak-Lösung der pH-Wert der Dispersion eingestellt.

Feststoffgehalt: 19,8%
Teilchengröße (PSDA, Volumen median): 34 nm

Dispersion B1 (Quellkern)

Die Vorlage, bestehend aus 1958,8 g Wasser und 14,54 g der Saat Dispersion A1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Zwei Minuten nach Zugabe von 26,68 g einer 7 Gew.-% Natriumperoxodisulfat-Lösung, wurden in 90 min parallel eine Mischung aus 0,62 g Allylmethacrylat und 217,34 g Methylmethacrylat und eine Lösung von 9,34 g Lutensit® A-EP A (Alkylpolyalkylenoxidphosphate (20%ig)), 9,34 g Disponil® LOBS 20 und 166 g Methacrylsäure in 562 g Wasser zudosiert. Zehn Minuten nach Zulaufende wurden parallel über 75 min 92,55 g einer 1,5 Gew.-% Nariumperoxodisulfat Lösung, eine Mischung aus 62 g n-Butylmethacrylat und 345,86 g Methylmethacrylat sowie eine Lösung von 2,49 g Disponil® LOBS 20 und 8,38 g Methacrylsäure in 276,89 g Wasser zudosiert. Abschließend wurde das Zulaufgefäß mit 33 g Wasser gespült und weiter 30 min nachpolymerisiert.

> Feststoffgehalt: 21,8%
> pH-Wert: 3,5
> Teilchengröße (PSDA, Volumen median): 186 nm

Dispersion C1

Die Vorlage, bestehend aus 261 g Wasser und 273,21 g von Dispersion B1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 132 g Wasser, 13,6 g Disponil® LOBS 20, 4,08 g Methacrylsäure, 17,2 g Methylmethacrylat, 10,88 g Acrylnitiril, 3,4 g Allylmethacrylat und 202,84 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben und der Zulauf mit 40,5 g Wasser gespült. Nach weiteren 20 min rühren wurden in 5 min 32 g einer 10 Gew.-% Ammoniak Lösung zudosiert und für 5 min eingerührt. Anschließend wurde über 15 min Voremulsion 2 bestehend aus 98,44 g Wasser, 7 g Disponil® LOBS 20, 0,28 g Methacrylsäure und 78 g Divinylbenzol (65%ig in Ethylvinylbenzol) zudosiert. Fünf Minuten nach Zulauf Ende wurden 5,64 g einer 10 Gew.-% wässrigen Lösung von *tert*-Butylhydroperoxid zugegeben und über 20 min 31 g einer 3 Gew.-% wässrigen Rongalit-C Lösung zudosiert. 30 Minuten nach Zulauf Ende wurde erneut 9,16 g einer 10 Gew.-% wässrigen Lösung von *tert*-Butylhydroperoxid und 8,52 g einer 5,1 Gew.-% wässrigen Rongalit-C® Lösung parallel über 60 min zudosiert.

> Feststoffgehalt: 29,7%
> pH-Wert: 9,5
> Teilchengröße (PSDA, Volumen median): 389 nm
> Weißgrad: 79
> Inneres Wasser: 24%

Beispiel 2:

Dispersion B2 (Quellkern)

Die Vorlage, bestehend aus 526 g Wasser, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Nach Zugabe einer Lösung aus 76 g Wasser, 1,41 g Disponil® FES 993 (Alkylpolyglycolethersulfate (30%ig)) und 10,96 EFKA®3031 (Polysiloxan Polyalkylenoxid Copolymere) wurde gewartet bis die Temperatur der Lösung wiederum 82 °C erreicht hatte. Dann wurden nacheinander Voremulsion 1, bestehend aus 15,62 g Wasser, 0,28 g Disponil® FES 993, 28,66 g Methylmethacrylat und 0,34 g Methacrylsäure und 11,43 g einer 10 Gew.-% Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 236 g Wasser, 18,63 g Disponil® FES 993, 250 g Methylmethacrylat und 144,31 g Methacrylsäure, innerhalb von 120 min bei 85°C zudosiert. Abschließend wurde das Zulaufgefäß mit 10 g Wasser gespült und weiter 15 min nachpolymerisiert.

> Feststoffgehalt: 33,2%
> pH-Wert: 3,6
> Teilchengröße (PSDA, Volumen median): 130 nm

Dispersion C2

Die Vorlage, bestehend aus 429 g Wasser und 80,13 g von Dispersion B2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 78°C geheizt und nach Zugabe von 18 g einer 2,5 Gew.-% Natriumperoxodisulfat-Lösung 5 min anpolymerisiert. Dann wurde Voremulsion 1, bestehend aus 30 g Wasser, 3 g Disponil® LOBS 20, 2,7 g Methacrylsäure, 23,8 g Methylmethacrylat und 34 g Styrol, zusammen mit 36 g einer 2,5 Gew.-% Natriumperoxodisulfat-Lösung innerhalb von 60 min bei 78°C beginnend zudosiert, während des Zulaufs wurde die Innentemperatur auf 80°C erhöht. Nach Ende der Zuläufe wurde Voremulsion 2 bestehend aus 118 g Wasser, 7 g Disponil® LOBS 20, 2 g Leinölfettsäuren, 0,9 g Allylmethacrylat und 296,1 g Styrol, zusammen mit 9 g einer 2,5 Gew.-% Natriumperoxodisulfat-Lösung innerhalb von 75 min bei 80°C beginnend zudosiert, während des Zulaufs wurde die Innentemperatur auf 82°C erhöht. Nach Ende der Zuläufe wurde die Innentemperatur auf 93 °C erhöht und für 15 min gerührt bevor 18 g α-Methylstyrol zugeben wurden. Nach weiteren 40 min rühren wurde die Temperatur auf 87 °C gesenkt. Nach Erreichen der Temperatur wurde 15 min gerührt bevor über 30 min 228 g einer 1,7 Gew.-% Ammoniak Lösung zudosiert wurden. Nach erneuten 15 minütigem Nachrrühren wurde über 30 min Voremulsion 3 bestehend aus 51 g Wasser, 1,2 g Disponil LOBS 20, 0,2 g Methacrylsäure und 41,8 g Divinylbenzol zudosiert. Fünf Minuten nach Zulauf Ende wurden 6 g einer 10 Gew.-% wässrigen Lösung von *tert*-Butylhydroperoxid zusammen mit 25 g Wasser zugegeben und über 60 min 31 g einer 3,3 Gew.-% wässrigen Rongalit-C® Lösung zudosiert.

Feststoffgehalt: 28,9%
pH-Wert: 10,2
Teilchengröße (PSDA, Volumen median): 387 nm
Weißgrad: 80
Inneres Wasser: 25%

Vergleichsbeispiel:

Dispersion BV1 (Quellkern)

Die Vorlage, bestehend aus 986 g Wasser und 28,2 g von Acronal® A508 wurde in einem Polymerisationsgefäß welches mit einem Ankerrührer, Ruckflusskühler und zwei Zulaufgefäßen ausgestattet war, in einer Stickstoffatmosphäre auf eine Temperatur von 82°C geheizt und nach Zugabe von 20,9 g einer 2,5%igen Natriumperoxodisulfat-Lösung 5 min anpolymerisiert. Dann wurde Voremulsion 1, bestehend aus 161 g Wasser, 2,20 g Disponil® LOBS 20, 13,70 g Lutensit® A-EP A, 0,07 g *tert*-Dodecylmercaptan, 136,3 g Methylmethacrylat, 0,66 g Allylmethacrylat und 68,3 g Methacrylsäure, innerhalb von 70 min bei 82°C zudosiert. Nach Ende des Zulaufs wurden 2,9 g einer 2,5%igen Natriumperoxodisulfat-Lösung zugegeben und 5 min gerührt. Im Anschluss daran wurde Voremulsion 2, bestehend aus 167 g Wasser, 1,76 g Disponil® LOBS 20, 110 g Methylmethacrylat, 13,5 g n-Butylacrylat und 1,35 g Methacrylsäure, zusammen mit 12 g einer 2,5%igen Natriumperoxodisulfat-Lösung innerhalb von 70 min bei 82°C zudosiert. Abschließend wurde noch 30 min nachpolymerisiert.

Feststoffgehalt: 19,7%
pH-Wert: 4,3
Teilchengröße (PSDA, Volumen median): 213 nm

Dispersion CV1

Die Vorlage, bestehend aus 458 g Wasser und 154,5 g von Dispersion BV1, wurde in einem Polymerisationsgefäß, welches mit einem Ankerrührer, Rückflusskühler und zwei Zulaufgefä-ßen ausgestattet war, in einer Stickstoffatmosphäre auf eine Temperatur von 82°C geheizt und nach Zugabe von 12,8 g einer 2,5%igen Natriumperoxodisulfat-Lösung 5 min anpolymerisiert. Dann wurde Voremulsion 1, bestehend aus 159 g Wasser, 6,7 g Disponil® LOBS 20, 9,8 g Methacrylsäure und 156 g Styrol, zusammen mit 16,8 g einer 2,5%igen Natriumperoxodisulfat-Lösung innerhalb von 90 min bei 82°C zudosiert. Nach Ende beider Zuläufe wurde die Innentemperatur innerhalb von 30 min auf 92°C erhöht und dann Voremulsion 2, bestehend aus 14 g Wasser, 0,5 g Arylsulfonat (15%ig) und 13,6 g α-Methylstyrol zugegeben und 5 min gerührt, dann erfolgte die Zugabe von 26 g 10 %igen Ammoniak-Wasser; die Reaktionsmischung wurde weitere 15 min bei 92°C gerührt. Im Anschluss daran wurden 3,6 g einer 2,5%igen Natriumperoxodisulfat-Lösung innerhalb von 3 min zudosiert. Voremulsion 3, bestehend aus 157 g Wasser, 5,9 g Disponil® LOBS 20, 0,2 g Methacrylsäure 20 g Divinylbenzol und 198 g Styrol, zusammen mit 23,7 g einer 2,5%igen Natriumperoxodisulfat-Lösung innerhalb von 100 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 12,0 g einer 10 %igen *tert*-Butylhydroperoxid-Lösung sowie 12,0 g einer 10 %igen Ascorbinsäure-Lösung innerhalb von 60 min bei 92°C zur Reaktionsmischung zudosiert.

Feststoffgehalt: 29,3%
pH-Wert: 8,6
Teilchengröße (PSDA, Volumen median): 480 nm
Weißgrad: 76
Inneres Wasser: 14 %

Beispiel 3

Saat Dispersion A2:

Aus 123,85 g Wasser 0,35 g Disponil® FES 993, 182 g n-Butylacrylat, 163,45 g Methylmethacrylat und 4,55 g Methacrylsäure wurde eine Voremulsion hergestellt. Die Vorlage, bestehend aus 1190,9 g Wasser, 24,97 g Disponil® FES 993 sowie 22,19 g der Voremulsion, wurde in einem Polymerisationsgefäß, welches mit einem Ankerrührer, Ruckflusskühler und zwei Zulaufgefäßen ausgestattet war, in einer Stickstoffatmosphäre auf eine Temperatur von 80°C geheizt und nach Zugabe von 67,2 g einer 2,5 Gew.-% Natriumperoxodisulfat-Lösung 15 min anpolymerisiert. Dann wurde der Rest der Voremulsion innerhalb von 60 min bei 80°C zudosiert. Anschließend wurde noch 15 min nachpolymerisiert und innerhalb von 20 min auf 55°C abgekühlt. Zur Abreicherung der Restmonomeren wurden dann 3,5 g einer 10 Gew.-% wässrigen *tert*-Butylhydroperoxid-Lösung sowie 2,19 g einer 10 Gew.-% wässrigen Rongalit C® Lösung zum Reaktionsgemisch zugegeben, nach einer Stunde rühren wurde auf 30°C abgekühlt und durch Zugabe von 4,38 g 25 Gew.-% wässriger Ammoniak-Lösung der pH-Wert der Dispersion eingestellt.

Feststoffgehalt: 19,9%
Teilchengröße (PSDA, Volumen median): 50 nm

Dispersion B3 (Quellkern)

Die Vorlage, bestehend aus 1822,6 g Wasser und 169 g der Saat Dispersion A2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Zwei Minuten nach Zugabe von 26,68 g einer 7 Gew.-% Nariumperoxodisulfat Lösung, wurden in 90 min parallel eine Mischung aus 0,62 g Allylmethacrylat und 217,34 g Methylmethacrylat und eine Lösung von 9,34 g Lutensit® A-EP A, 9,34 g Disponil® LOBS 20 und 166 g Methacrylsäure in 562 g Wasser zudosiert. Zehn Minuten nach Zulaufende wurden parallel über 75 min 92,55 g einer 1,5 Gew.-% Nariumperoxodisulfat Lösung, eine Mischung aus 62 g n-Butylmethacrylat und 345,86 g Methylmethacrylat sowie eine Lösung von 2,49 g Disponil® LOBS 20 und 8,38 g Methacrylsäure in 276,89 g Wasser zudosiert. Abschließend wurde das Zulaufgefäß mit 33 g Wasser gespült und weiter 30 min nachpolymerisiert.

Feststoffgehalt: 21,9%
pH-Wert: 3,5
Teilchengröße (PSDA, Volumen median): 190 nm

Dispersion C3

Die Vorlage, bestehend aus 261 g Wasser und 273,21 g von Dispersion B3, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 132 g Wasser, 13,6 g Disponil® LOBS 20, 4,08 g Methacrylsäure, 17,2 g Methylmethacrylat, 10,88 g Acrylnitiril, 3,4 g Allylmethacrylat und 202,84 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben und der Zulauf mit 40,5 g Wasser gespült. Nach weiteren 20 min rühren wurden in 5 min 32 g einer 10 Gew.-% Ammoniak Lösung zudosiert und für 5 min eingerührt. Anschließend wurde über 15 min Voremulsion 2 bestehend aus 98,44 g Wasser, 7 g Disponil ® LOBS 20, 0,28 g Methacrylsäure und 78g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

Feststoffgehalt: 29,7%
pH-Wert: 9,5

Teilchengröße (PSDA, Volumen median): 394 nm
Weißgrad: 80
Inneres Wasser: 25%

Beispiel 4:

Saat Dispersion:

Analog Beispiel 3
Dispersion (Quellkern)
Analog Beispiel 3
Dispersion C4

Die Vorlage, bestehend aus 261 g Wasser und 273,21 g von Dispersion B3, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 132 g Wasser, 13,6 g Disponil® LOBS 20, 4,08 g Methacrylsäure, 17,2 g Methylmethacrylat, 3,4 g Allylmethacrylat und 213,72 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben und der Zulauf mit 40,5 g Wasser gespült. Nach weiteren 20 min rühren wurden in 5 min 32 g einer 10 Gew.-% Ammoniak Lösung zudosiert und für 5 min eingerührt. Anschließend wurde über 15 min Voremulsion 2 bestehend aus 98,44 g Wasser, 7 g Disponil® LOBS 20, 0,28 g Methacrylsäure und 78 g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

Feststoffgehalt: 29,7%
pH-Wert: 9,5
Teilchengröße (PSDA, Volumen median): 390 nm
Weißgrad: 80
Inneres Wasser: 25%

Beispiel 5:

Analog Beispiel 3
Dispersion (Quellkern)
Analog Beispiel 3

Dispersion C5

Die Vorlage, bestehend aus 261 g Wasser und 273,21 g von Dispersion B3, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 102 g Wasser, 13,6 g Disponil® LOBS 20, 2 g Leinölfettsäuren, 17,2 g Methylmethacrylat, 3,4 g Allylmethacrylat und 217,8 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben. Nach weiteren 20 min rühren wurden in 20 min 219,28 g einer 3 Gew.-% Natriumhydroxid Lösung zudosiert und für 5 min eingerührt. Anschließend wurde über 15 min Voremulsion 2 bestehend aus 40,44 g Wasser, 7 g Disponil® LOBS 20, 0,28 g Methacrylsäure und 78 g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

    Feststoffgehalt: 30 %
    pH-Wert: 8,3
    Teilchengröße (PSDA, Volumen median): 400 nm
    Weißgrad: 79
    Inneres Wasser: 24%

Beispiel 6:

Saat Dispersion:

    Analog Beispiel 3
    Dispersion (Quellkern)
    Analog Beispiel 3
    Dispersion C6

Die Vorlage, bestehend aus 261 g Wasser und 273,21 g von Dispersion B3, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 102 g Wasser, 13,6 g Disponil® LOBS 20, 2 g Leinölfettsäuren, 17,2 g Methylmethacrylat, 3,4 g Allylmethacrylat und 217,8 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben. Nach weiteren 20 min rühren wurden in 20 min 243,64 g einer 6 Gew.-% Natriumhydrogencarbonat Lösung zudosiert und für 5 min eingerührt. Anschließend wurde über 15 min Voremulsion 2 bestehend aus 40 g Wasser, 7 g Disponil® LOBS 20, 0,28 g Methacrylsäure und 78 g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

    Feststoffgehalt: 30 %
    pH-Wert: 7,5
    Teilchengröße (PSDA, Volumen median): 385 nm
    Weißgrad: 79
    Inneres Wasser: 24%

Beispiel 7:

Saat Dispersion:

    Analog Beispiel 3
    Dispersion (Quellkern) B4

Die Vorlage, bestehend aus 1958,8 g Wasser und 14,54 g der Saat Dispersion A2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Zwei Minuten nach Zugabe von 26,68 g einer 7 Gew.-% Nariumperoxodisulfat Lösung, wurden in 90 min parallel 217,96 g Methylmethacrylat und eine Lösung von 9,34 g Lutensit® A-EP A, 9,34 g Disponil® LOBS 20 und 166 g Methacrylsäure in 562 g Wasser zudosiert. Zehn Minuten nach Zulaufende wurden parallel über 75 min 92,55 g einer 1,5 Gew.-% Nariumperoxodisulfat Lösung, eine Mischung aus 62 g n-Butylmethacrylat und 345,86 g Methylmethacrylat sowie eine Lösung von 2,49 g Disponil® LOBS 20 und 8,38 g Methacrylsäure in 276,89 g Wasser zudosiert. Abschließend wurde das Zulaufgefäß mit 33 g Wasser gespült und weiter 30 min nachpolymerisiert.

    Feststoffgehalt: 22%
    pH-Wert: 3,5
    Teilchengröße (PSDA, Volumen median): 185 nm

Dispersion C7

Die Vorlage, bestehend aus 261 g Wasser und 273,21 g von Dispersion B4, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 132 g Wasser, 13,6 g Disponil® LOBS 20, 2 g Leinölfettsäuren, 17,2 g Methylmethacrylat, 3,4 g Allylmethacrylat und 217,8 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben und der Zulauf mit 40,5 g Wasser gespült. Nach weiteren 20 min rühren wurden in 5 min 32 g einer 10 Gew.-% Ammoniak Lösung zudosiert und für 5 min eingerührt. Anschließend wurde über 15 min Voremulsion 2 bestehend aus 98,44 g Wasser, 7 g Disponil® LOBS 20, 0,28 g Methacrylsäure und 78 g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

Feststoffgehalt: 30 %
pH-Wert: 7,5
Teilchengröße (PSDA, Volumen median): 385 nm
Weißgrad: 79
Inneres Wasser: 24%

Beispiel 8:

Saat Dispersion:

Analog Beispiel 1
Dispersion (Quellkern) B5

Die Vorlage, bestehend aus 1958,8 g Wasser und 14,54 g der Saat Dispersion A1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Zwei Minuten nach Zugabe von 26,68 g einer 7 Gew.-% Nariumperoxodisulfat Lösung, wurden in 90 min parallel eine Mischung aus 3,84 g 2-Ethylhexylthioglykolat und 217,34 g Methylmethacrylat und eine Lösung von 9,34 g Lutensit® A-EP A, 9,34 g Disponil® LOBS 20 und 166 g Methacrylsäure in 562 g Wasser zudosiert. Zehn Minuten nach Zulaufende wurden parallel über 75 min 92,55 g einer 1,5 Gew.-% Nariumperoxodisulfat Lösung, eine Mischung aus 62 g n-Butylmethacrylat und 345,86 g Methylmethacrylat sowie eine Lösung von 2,49 g Disponil® LOBS 20 und 8,38 g Methacrylsäure in 276,89 g Wasser zudosiert. Abschließend wurde das Zulaufgefäß mit 33 g Wasser gespült und weiter 30 min nachpolymerisiert.

Feststoffgehalt: 21,9%
pH-Wert: 3,7
Teilchengröße (PSDA, Volumen median): 187 nm

Dispersion C8

Die Vorlage, bestehend aus 261 g Wasser und 273,21 g von Dispersion B5, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 132 g Wasser, 13,6 g Disponil® LOBS 20, 2 g Leinölfettsäuren, 17,2 g Methylmethacrylat, 3,4 g Allylmethacrylat und 217,8 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben und der Zulauf mit 40,5 g Wasser gespült. Nach weiteren 20 min rühren wurden in 5 min 32 g einer 10 Gew.-% Ammoniak Lösung zudosiert und für 5 min eingerührt. Anschließend wurde über 15 min Voremulsion 2 bestehend aus 98,44 g Wasser, 7 g Disponil® LOBS 20, 0,28 g Methacrylsäure und 78 g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

Feststoffgehalt: 30 %
pH-Wert: 7,5
Teilchengröße (PSDA, Volumen median): 405 nm
Weißgrad: 80
Inneres Wasser: 26%

Beispiel 9:

Dispersion (Quellkern) B6

Die Vorlage, bestehend aus 521 g Wasser und 1,64 g Disponil® FES 993, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Anschließend wurde Voremulsion 1, bestehend aus 15,19 g Wasser, 0,27 g Disponil® FES 993, 27,88 g Methylmethacrylat und 0,33 g Methacrylsäure und 11,43 g einer 10 Gew.-% Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 485,67 g Wasser, 27,22 g Disponil® FES 993, 334,22 g Methylmethacrylat 9 g Allylmethacrylat und 228,82 g Methacrylsäure, innerhalb von 120 min bei 85°C zudosiert. Abschließend wurde das Zulaufgefäß mit 10 g Wasser gespült und weiter 15 min nachpolymerisiert. Anschließend wurden parallel über 75 min 133,35 g einer 1,5 Gew.-% Nariumperoxodisulfat Lösung, eine Mischung aus 89,33 g n-Butylmethacrylat und 489,33 g Methylmethacrylat sowie eine Lösung von 3,59 g Disponil® LOBS 20 und 12,07 g Methacrylsäure in 700 g Wasser zudosiert. Abschließend wurde das Zulaufgefäß mit 48 g Wasser gespült und weiter 30 min nachpolymerisiert.

> Feststoffgehalt: 33,1%
> pH-Wert: 3,7
> Teilchengröße (PSDA, Volumen median): 189 nm

Dispersion C9

Die Vorlage, bestehend aus 354,16 g Wasser und 179,94 g von Dispersion B6, wurde in einem Polymerisationsgefäß, welches mit einem Ankerrührer, Rückflusskühler und zwei Zulaufgefä-ßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 132 g Wasser, 13,6 g Disponil® LOBS 20, 2 g Leinölfettsäuren, 10,88 g Acrylnitril, 17,2 g Methylmethacrylat, 3,4 g Allylmethacrylat und 206,9 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben und der Zulauf mit 40,5 g Wasser gespült. Nach weiteren 20 min rühren wurden in 5 min 32 g einer 10 Gew.-% Ammoniak Lösung zudosiert und für 5 min eingerührt. Anschließend wurde über 15 min Voremulsion 2 bestehend aus 98,44 g Wasser, 7 g Disponil® LOBS 20, 0,28 g Methacrylsäure und 78 g Divinylbenzol zudosiert. Fünf Minuten nach Zulauf Ende wurden 5,64 g einer 10 Gew.-% wässrigen Lösung von tert-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von tert-Butylhydroperoxid und 8,52 g einer 5,1 Gew.-% wässrigen Rongalit-C® Lösung parallel über 60 min zudosiert.

Feststoffgehalt: 29,8 %
pH-Wert: 9,5
Teilchengröße (PSDA, Volumen median): 398 nm
Weißgrad: 80
Inneres Wasser: 25%

Beispiel 10:

Dispersion (Quellkern) B7

Die Vorlage, bestehend aus 478,53 g Wasser, 1,64 g Disponil® FES 993 und 13,27 EFKA® 3031 wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt. Anschließend wurde Voremulsion 1, bestehend aus 80,68 g Wasser, 0,27 g Disponil® FES 993, 27,88 g Methylmethacrylat und 0,33 g Methacrylsäure und 15,88 g einer 7 Gew.-% Nariumperoxodisulfat Lösung zugegeben und für 30 min polymerisiert wobei die Temperatur innerhalb des Polymerisationsgefäßes auf 85°C eingestellt wurde. Im Anschluss daran wurde Voremulsion 2, bestehend aus 485,67 g Wasser, 27,22 g Disponil® FES 993, 334,22 g Methylmethacrylat, 9,00 g Allymethacrylat und 228,82 g Methacrylsäure, innerhalb von 120 min bei 85°C zudosiert. Abschließend wurde das Zulaufgefäß mit 450,16 g Wasser gespült und weiter 15 min nachpolymerisiert. Anschließend wurden parallel über 75 min 133,35 g einer 1,5 Gew.-% Nariumperoxodisulfat Lösung, eine Mischung aus 89,33 g n-Butylmethacrylat und 498,33 g Methylmethacrylat sowie eine Lösung von 3,59 g Disponil® LOBS 20 und 12,07 g Methacrylsäure in 700 g Wasser zudosiert. Abschließend wurde das Zulaufgefäß mit 48 g Wasser gespült und weiter 30 min nachpolymerisiert.

Feststoffgehalt: 33,1%
pH-Wert: 2,9
Teilchengröße (PSDA, Volumen median): 188 nm

Dispersion C10

Die Vorlage, bestehend aus 354 g Wasser und 175 g von Dispersion B7, wurde in einem Polymerisationsgefäß, welches mit einem Ankerrührer, Rückflusskühler und zwei Zulaufgefäßen ausgestattet war, in einer Stickstoffatmosphäre auf eine Temperatur von 81°C geheizt. Nach Zugabe von 25,2 g einer 1,4 Gew.-% Natriumperoxodisulfat-Lösung wurde Voremulsion 1, bestehend aus 102 g Wasser, 13,6 g Disponil® LOBS 20, 2 g Leinölfettsäuren, 17,2 g Methylmethacrylat, 3,4 g Allylmethacrylat und 217,8 g Styrol, zusammen mit 24,32 g einer 2,5 Gew.-% Natriumperoxodisulfat-Lösung innerhalb von 120 min zudosiert. Nach Ende der Zuläufe wurden 3,36 g einer 2,5 Gew.-% Natriumperoxodisulfat-Lösung zugegeben und die Innentemperatur über 40 min auf 92 °C erhöht. Anschließend wurden in 10 min 23,76 g α-Methylstyrol zugeben. Nach weiteren 20 min rühren wurden in 20 min 243,64 g einer 2,8 Gew.-% Natriumhydroxid Lösung zudosiert und für 60 min eingerührt. Anschließend wurde über 15 min Voremulsion 2 bestehend aus 40 g Wasser, 7 g Disponil® LOBS 20, 0,28 g Methacrylsäure und 78 g Styrol zudosiert. Fünf Minuten nach Zulauf Ende wurden 5,64 g einer 10 Gew.-% wässrigen Lösung von *tert*-Butylhydroperoxid zugegeben und über 20 min 31 g einer 3 Gew.-% wässrigen Rongalit-C® Lösung zudosiert. 30 Minuten nach Zulauf Ende wurde erneut 9,16 g einer 10 Gew.-% wässrigen Lösung von *tert*-Butylhydroperoxid und 8,52 g einer 5,1 Gew.-% wässrigen Rongalit-C® Lösung parallel über 60 min zudosiert.

Feststoffgehalt: 29,5 %
pH-Wert: 8,6
Teilchengröße (PSDA, Volumen median): 398 nm
Weißgrad: 80
Inneres Wasser: 25%

**Patentansprüche**

1. Verfahren zur Herstellung von organischen Hohlteilchen, durch Herstellung eines Mehrstufenemulsionspolymers durch sequentielle Polymerisation

    i) einer Saat, und
    ii) anschließender Umsetzung mit einer Quellsaat enthaltend 55 bis 99,9 Gew.-% mindestens eines nicht-ionischen ethylenisch ungesättigten Monomers und 0,1 bis 45 Gew.-% mindestens eines ethylenisch ungesättigten hydrophilen Monomers, jeweils bezogen auf das Gesamtgewicht des Kernstufenpolymers, das sowohl Saat als auch Quellsaat umfasst,
    iii) anschließender Polymerisation einer ersten Schale enthaltend 85 bis 99,9 Gew.-% mindestens eines nicht-ionischen ethylenisch ungesättigten Monomers und 0,1 bis 15 Gew.-% mindestens eines hydrophilen ethylenisch ungesättigten Monomers,
    iv) anschließender Polymerisation einer zweiten Schale enthaltend 85 bis 99,9 Gew.-% mindestens eines nicht-ionischen ethylenisch ungesättigten Monomers und 0,1 bis 15 Gew.-% mindestens eines hydrophilen ethylenisch ungesättigten Monomers,
    v) anschließender Zugabe mindestens eines Weichmachermonomers mit einer Ceiling Temperatur kleiner 181°C,
    vi) Neutralisation bis zu einem pH-Wert von mindestens 7,5 oder größer, der so gebildeten Partikel mit einer oder mehrerer Basen,
    vii) anschließender Polymerisation einer dritten Schale enthaltend 90 bis 99,9 Gew.-% mindestens eines nicht-ionischen ethylenisch ungesättigten Monomers und 0,1 bis 10 Gew.-% mindestens eines hydrophilen ethylenisch ungesättigten Monomers,
    viii) sowie gegebenenfalls Polymerisation einer oder mehrerer weiterer Schalen enthaltend mindestens ein nicht-ionisches ethylenisch ungesättigtes Monomer und mindestens ein hydrophiles ethylenisch ungesättigtes Monomer, wobei

das Gewichtsverhältnis der Quellsaat (ii) zu dem Saatpolymer (i) 10:1 bis 150:1, das Gewichtsverhältnis des Kernstufenpolymers zu der ersten Schale (iii) 2:1 bis 1:5, und Gewichtsverhältnis der dritten Schale (vii) zur zweiten Schale (iv) 1:2 bis 1:10 beträgt.

2. Verfahren gemäß Anspruch 1, **dadurch gekennzeichnet, dass** die mittlere Teilchengröße im ungequollenen Zustand des Kernstufenpolymers aus Saat (i) und Quellsaat (ii), 50 bis 300 nm beträgt.

3. Verfahren gemäß einem der Ansprüche 1 oder 2, **dadurch gekennzeichnet, dass** im protonierten Zustand die Glasübergangstemperatur, bestimmt nach der Fox-Gleichung, des Kernstufenpolymers zwischen -20°C und 150°C liegt.

4. Verfahren gemäß einem der Ansprüche 1 bis 3, **dadurch gekennzeichnet, dass** das Schalenpolymer(iii) im protonierten Zustand eine Glasübergangstemperatur, bestimmt nach der Fox-Gleichung, zwischen -60°C und 120°C besitzt.

5. Verfahren gemäß einem der Ansprüche 1 bis 4, **dadurch gekennzeichnet, dass** die Teilchengröße der Stufe (iii) im ungequollenen Zustand 60 nm bis 500 nm beträgt.

6. Verfahren gemäß einem der Ansprüche 1 bis 5, **dadurch gekennzeichnet, dass** das Schalenpolymer (iv) im protonierten Zustand eine Glasübergangstemperatur nach Fox von 50 bis 120°C besitzt.

7. Verfahren gemäß einem der Ansprüche 1 bis 6, **dadurch gekennzeichnet, dass** die mittlere Teilchengröße der Stufe (iv) 70 bis 1000 nm beträgt.

8. Verfahren gemäß einem der Ansprüche 1 bis 7, **dadurch gekennzeichnet, dass** das unter (v) aufgeführte Weichmachermonomer ausgewählt ist aus der Gruppe α- Methylstyrol, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen oder Methyl-2-tert-butylacrylat.

9. Verfahren gemäß einem der Ansprüche 1 bis 8, **dadurch gekennzeichnet, dass** die unter (vi) aufgeführten Basen ausgewählt sind aus der Gruppe der Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin , Polyvinylamin oder Mischungen davon.

**10.** Verfahren gemäß einem der Ansprüche 1 bis 9, **dadurch gekennzeichnet, dass** das Schalenpolymer (vii) im protonierten Zustand eine Glasübergangstemperatur nach Fox von 50 bis 120°C besitzt.

**11.** Organisches Hohlteilchen erhältlich durch ein Verfahren gemäß einem der Ansprüche 1 bis 10.

**12.** Organisches Hohlteilchen erhältlich durch ein Verfahren gemäß einem der Ansprüche 1 bis 10, **dadurch gekennzeichnet, dass** der Weißgrad der verwendeten Polymerisatteilchen ≥78 ist.

**13.** Verwendung der gemäß einem Verfahren der Ansprüche 1 bis 10 hergestellten organischen Hohlteilchen, in Anstrichmitteln, Papierbeschichtungen, kosmetischen Mitteln, Pflanzenschutzmitteln, Tinten, Schäumen oder in thermoplastischen Formmassen.

**14.** Anstrichmittel enthaltend gemäß den Ansprüchen 1 bis 10 hergestellte organische Hohlteilchen.

**15.** Anstrichmittel gemäß Anspruch 14, **dadurch gekennzeichnet, dass** der Weißgrad der verwendeten organischen Hohlteilchen ≥78 ist.

**Claims**

**1.** A process for producing organic hollow particles by producing a multi-stage emulsion polymer by sequential polymerization of

> i) a seed and
> ii) subsequent reaction with a swell-seed containing 55% to 99.9% by weight of at least one nonionic ethylenically unsaturated monomer and 0.1% to 45% by weight of at least one ethylenically unsaturated hydrophilic monomer, in each case based on the total weight of the core stage polymer which comprises both the seed and the swell-seed,
> iii) subsequent polymerization of a first shell containing 85% to 99.9% by weight of at least one nonionic ethylenically unsaturated monomer and 0.1% to 15% by weight of at least one hydrophilic ethylenically unsaturated monomer,
> iv) subsequent polymerization of a second shell containing 85% to 99.9% by weight of at least one nonionic ethylenically unsaturated monomer and 0.1% to 15% by weight of at least one hydrophilic ethylenically unsaturated monomer,
> v) subsequent addition of at least one plasticizer monomer with a ceiling temperature below 181°C,
> vi) neutralization to a pH of at least 7.5 or above of the thus-formed particles with one or more bases,
> vii) subsequent polymerization of a third shell containing 90% to 99.9% by weight of at least one nonionic ethylenically unsaturated monomer and 0.1% to 10% by weight of at least one hydrophilic ethylenically unsaturated monomer,
> viii) and optionally polymerization of one or more further shells containing at least one nonionic ethylenically unsaturated monomer and at least one hydrophilic ethylenically unsaturated monomer, wherein

the weight ratio of the swell-seed (ii) to the seed polymer (i) is 10:1 to 150:1, the weight ratio of the core stage polymer to the first shell (iii) is 2:1 to 1:5, and the weight ratio of the third shell (vii) to the second shell (iv) is 1:2 to 1:10.

**2.** The process according to claim 1, wherein the average particle size in the unswollen state of the core stage polymer from seed (i) and swell-seed (ii) is 50 to 300 nm.

**3.** The process according to claim 1 or 2, wherein in the protonated state the glass transition temperature, determined according to the Fox equation, of the core stage polymer is between -20°C and 150°C.

**4.** The process according to any of claims 1 to 3, wherein in the protonated state the shell polymer (iii) has a glass transition temperature, determined according to the Fox equation, between -60°C and 120°C.

**5.** The process according to any of claims 1 to 4, wherein the particle size of stage (iii) in the unswollen state is 60 nm to 500 nm.

**6.** The process according to any of claims 1 to 5, wherein in the protonated state the shell polymer (iv) has a glass transition temperature according to Fox of 50°C to 120°C.

7. The process according to any of claims 1 to 6, wherein the average particle size of stage (iv) is 70 to 1000 nm.

8. The process according to any of claims 1 to 7, wherein the plasticizer monomer shown under (v) is selected from the group of α-methylstyrene, esters of 2-phenylacrylic acid/atropic acid (for example methyl, ethyl, n-propyl, n-butyl), 2-methyl-2-butene, 2,3-dimethyl-2-butene, 1,1-diphenylethene or methyl 2-tert-butylacrylate.

9. The process according to any of claims 1 to 8, wherein the bases shown under (vi) are selected from the group of alkali or alkaline earth metal compounds such as sodium hydroxide, potassium hydroxide, calcium hydroxide, magnesium oxide, sodium carbonate; ammonia; primary, secondary and tertiary amines, such as ethylamine, propylamine, monoisopropylamine, monobutylamine, hexylamine, ethanolamine, dimethylamine, diethylamine, di-n-propylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminethylamine, 2,3-diaminopropane, 1,2-propylenediamine, dimethylaminopropylamine, neopentanediamine, hexamethylenediamine, 4,9-dioxadodecane-1,12-diamine, polyethyleneimine, polyvinylamine or mixtures thereof.

10. The process according to any of claims 1 to 9, wherein in the protonated state the shell polymer (vii) has a glass transition temperature according to Fox of 50°C to 120°C.

11. An organic hollow particle obtainable by a process according to any of claims 1 to 10.

12. An organic hollow particle obtainable by a process according to any of claims 1 to 10, wherein the whiteness of the employed polymer particles is ≥78.

13. The use of the organic hollow particles produced by a process according to any of claims 1 to 10 in paints, paper coatings, cosmetic compositions, plant protection products, inks, foams or in thermoplastic molding materials.

14. A paint containing organic hollow particles produced according to claims 1 to 10.

15. The paint according to claim 14, wherein the whiteness of the employed organic hollow particles is ≥78.

**Revendications**

1. Procédé pour la préparation de particules creuses organiques par préparation d'un polymère en émulsion à plusieurs étages par polymérisation séquentielle

    i) d'un germe et
    ii) transformation consécutive avec un germe de gonflement contenant 55 à 99,9% en poids d'au moins un monomère non ionique éthyléniquement insaturé et 0,1 à 45% en poids d'au moins un monomère hydrophile éthyléniquement insaturé, à chaque fois par rapport au poids total du polymère de l'étage de noyau, qui comprend tant le germe que le germe de gonflement,
    iii) polymérisation consécutive d'une première enveloppe contenant 85 à 99,9% en poids d'au moins un monomère non ionique éthyléniquement insaturé et 0,1 à 15% en poids d'au moins un monomère hydrophile éthyléniquement insaturé,
    iv) polymérisation consécutive d'une deuxième enveloppe contenant 85 à 99,9% en poids d'au moins un monomère non ionique éthyléniquement insaturé et 0,1 à 15% en poids d'au moins un monomère hydrophile éthyléniquement insaturé,
    v) ajout consécutif d'au moins un monomère plastifiant présentant une température de polymérisation critique inférieure à 181°C,
    vi) neutralisation jusqu'à un pH d'au moins 7,5 ou plus des particules ainsi formées à l'aide d'une ou de plusieurs bases,
    vii) polymérisation consécutive d'une troisième enveloppe contenant 90 à 99,9% en poids d'au moins un monomère non ionique éthyléniquement insaturé et 0,1 à 10% en poids d'au moins un monomère hydrophile éthyléniquement insaturé,
    viii) ainsi que le cas échéant polymérisation d'une ou de plusieurs autres enveloppes contenant au moins un monomère non ionique éthyléniquement insaturé et au moins un monomère hydrophile éthyléniquement insaturé,

le rapport pondéral du germe de gonflement (ii) au polymère germe (i) étant de 10:1 à 150:1, le rapport pondéral du polymère d'étage de noyau à la première enveloppe (iii) étant de 2:1 à 1:5 et le rapport pondéral de la troisième enveloppe (vii) à la deuxième enveloppe (iv) étant de 1:2 à 1:10.

2. Procédé selon la revendication 1, **caractérisé en ce que** la grosseur moyenne des particules dans l'état non gonflé du polymère d'étage de noyau constitué par le germe (i) et le germe de gonflement (ii) est de 50 à 300 nm.

3. Procédé selon l'une des revendications 1 ou 2, **caractérisé en ce que** dans l'état protoné, la température de transition vitreuse, déterminée selon l'équation de Fox, du polymère d'étage de noyau est située entre -20°C et 150°C.

4. Procédé selon l'une des revendications 1 à 3, **caractérisé en ce que** le polymère d'enveloppe (iii) présente, dans l'état protoné, une température de transition vitreuse, déterminée selon l'équation de Fox, entre -60°C et 120°C.

5. Procédé selon l'une des revendications 1 à 4, **caractérisé en ce que** la grosseur des particules de l'étage (iii) à l'état non gonflé est de 60 nm à 500 nm.

6. Procédé selon l'une des revendications 1 à 5, **caractérisé en ce que** le polymère d'enveloppe (iv), dans l'état protoné, présente une température de transition vitreuse selon Fox de 50 à 120°C.

7. Procédé selon l'une des revendications 1 à 6, **caractérisé en ce que** la grosseur moyenne des particules de l'étage (iv) est de 70 à 1000 nm.

8. Procédé selon l'une des revendications 1 à 7, **caractérisé en ce que** le monomère plastifiant mentionné au point (v) est choisi dans le groupe constitué par l'$\alpha$-méthylstyrène, les esters de l'acide 2-phénylacrylique/acide atropique (par exemple méthylique, éthylique, n-propylique, n-butylique), le 2-méthyl-2-butène, le 2,3-diméthyl-2-butène, le 1,1-diphényléthène ou le 2-méthylacrylate de tert-butyle.

9. Procédé selon l'une des revendications 1 à 8, **caractérisé en ce que** les bases mentionnées au point (vi) sont choisies dans le groupe constitué par les composés de métal alcalin ou alcalino-terreux, tels que l'hydroxyde de sodium, l'hydroxyde de potassium, l'hydroxyde de calcium, l'oxyde de magnésium, le carbonate de sodium ; l'ammoniaque ; les amines primaires, secondaires et tertiaires, telles que l'éthylamine, la propylamine, la mono-isopropylamine, la monobutylamine, l'hexylamine, l'éthanolamine, la diméthylamine, la diéthylamine, la di-n-propylamine, la tributylamine, la triéthanolamine, la diméthoxyéthylamine, la 2-éthoxyéthylamine, la 3-éthoxypropylamine, la diméthyléthanolamine, la diisopropanolamine, la morpholine, l'éthylènediamine, la 2-diéthylaminoéthylamine, le 2,3-diaminopropane, la 1,2-propylènediamine, la diméthylaminopropylamine, la néopentanediamine, l'hexaméthylènediamine, la 4,9-dioxadodécane-1,12-diamine, la polyéthylénimine, la polyvinylamine ou leurs mélanges.

10. Procédé selon l'une des revendications 1 à 9, **caractérisé en ce que** le polymère d'enveloppe (vii) dans l'état protoné présente une température de transition vitreuse selon Fox de 50 à 120°C.

11. Particules creuses organiques pouvant être obtenues par un procédé selon l'une des revendications 1 à 10.

12. Particules creuses organiques pouvant être obtenues par un procédé selon l'une des revendications 1 à 10, **caractérisées en ce que** le degré de blancheur des particules polymères utilisées est ≥78.

13. Utilisation des particules creuses organiques préparées selon un procédé des revendications 1 à 10 dans des peintures, des revêtements de papier, des agents cosmétiques, des agents de phytoprotection, des encres, des mousses ou dans des masses de moulages thermoplastiques.

14. Peinture contenant des particules creuses organiques préparées selon les revendications 1 à 10.

15. Peinture selon la revendication 14, **caractérisé en ce que** le degré de blancheur des particules creuses organiques utilisées est ≥78.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1904544 A
- WO 2011009875 A
- EP 0915108 A
- EP 1193276 A
- US 8013081 B
- EP 2511312 A
- DE 2501123

**In der Beschreibung aufgeführte Nicht-Patentliteratur**

- **C. J. MCDONALD ; M. J. DEVON.** *Advances in Colloid and Interface Science,* 2002, vol. 99, 181-213
- Fox-Gleichung. John Wiley & Sons Ltd, 1997
- **J. BRANDRUP ; E.H. IMMERGUT.** Polymer Handbook 3rd Edition
- **VON DEN AUTOREN M. SCHWARTZ ; R. BAUM-STARK.** *water-based acrylates for decorative coatings,* ISBN 3-87870-726-6
- Fox-Gleichung. John Wiley & Sons Ltd, 1997
- *Annalen der Physik,* 1971, vol. 27 (1), 107-109